# EUROPÄISCHE PATENTSCHRIFT

(11) **EP 3 094 510 B1**
(45) Veröffentlichungstag und Bekanntmachung des Hinweises auf die Patenterteilung: **28.02.2018**
(21) Anmeldenummer: 14825120.0
(22) Anmeldetag: 16.12.2014
(51) Int. Cl.: B60C 23/04

(54) **VERFAHREN ZUM ANPASSEN EINER REIFENDRUCKKONTROLLEINRICHTUNG AN EINEN FAHRZEUGTYP SOWIE EIN REIFENDRUCKKONTROLLSYSTEM MIT WENIGSTENS EINER DURCH DIESES VERFAHREN ANPASSBAREN REIFENDRUCKKONTROLLEINRICHTUNG UND REIFENDRUCKKONTROLLEINRICHTUNG DAFÜR**
METHOD FOR ADAPTING A TIRE PRESSURE MONITORING DEVICE TO A VEHICLE TYPE AND ASSOCIATED TIRE PRESSURE MONITORING SYSTEM THERETO
METHODE POUR ADAPTER UN SYSTÈME DE SURVEILLANCE DE PRESSION DE PNEUMATIQUES À UN TYPE DE VÉHICULE, ET SYSTÈME DE SURVEILLANCE DE PRESSION DE PNEUMATIQUES ASSOCIÉ

(30) Priorität: 17.01.2014 DE 102014100533; 08.08.2014 DE 102014111326; 08.08.2014 DE 102014111324; 21.08.2014 DE 102014111968; 21.08.2014 DE 102014111966; 03.09.2014 DE 102014112652
(43) Veröffentlichungstag der Anmeldung: 23.11.2016
(73) Patentinhaber: Huf Hülsbeck & Fürst GmbH & Co. KG, 42551 Velbert (DE)
(72) Erfinder: KESSLER, Ralf, 76327 Pfinztal (DE); WAGNER, Markus, 71638 Ludwigsburg (DE); DUSSINGER, Axel, 74960 Bad Rappenau (DE); MÜLLER, Benjamin, 45133 Essen (DE); HOFMANN, Roland, 75175 Pforzheim (DE)
(74) Vertreter: Twelmeier Mommer & Partner
(86) Internationale Anmeldenummer: PCT/EP2014/077929
(87) Internationale Veröffentlichungsnummer: WO 2015/106907

(56) Entgegenhaltungen:
- US-A1- 2013 226 403

## Beschreibung

Die Erfindung betrifft ein Verfahren zum Anpassen einer Reifendruckkontrolleinrichtung, welche zum Anbringen an ein Rad eines mit Luftreifen versehenen Fahrzeugs eingerichtet ist, an einen Fahrzeugtyp.

Eine solche Reifendruckkontrolleinrichtung kann im Inneren des Luftreifens am Luftreifen selbst, an der Felge oder am Ventil angebracht sein. Außerhalb des Luftreifens kann die Reifendruckkontrolleinrichtung am Ventil angebracht sein. Die Reifendruckkontrolleinrichtung, häufig auch als Radelektronik bezeichnet, hat eine Einrichtung zum Bestimmen des im Luftreifen herrschenden Luftdrucks, auch als Reifendruck bezeichnet, und/oder zum Bestimmen einer Änderung des Reifendrucks. Die Reifendruckkontrolleinrichtung kann darüber hinaus noch eine oder mehrere Einrichtungen zum Messen anderer Zustandsgrößen als den Reifendruck aufweisen, insbesondere einen Temperatursensor zum Messen der Temperatur der Reifendruckkontrolleinrichtung und/oder einen oder zwei Beschleunigungssensoren, mit denen der Bewegungszustand des Reifens ermittelt werden kann. Eine elektrische Schaltung, welche üblicherweise einen ASIC, einen Mikroprozessor oder einen Mikrocontroller enthält, dient zur Steuerung der Reifendruckkontrolleinrichtung und eventuell auch zur Verarbeitung der gewonnenen Messergebnisse. Ein Programm für die Schaltung kann in einem digitalen Speicher gespeichert sein, welcher der Schaltung zugeordnet ist oder Bestandteil der Schaltung ist.

Die Reifendruckkontrolleinrichtung ist mit einem Sender ausgerüstet, der in einem "ersten" Frequenzbereich arbeitet. Bekannte Reifendruckkontrolleinrichtungen haben einen Sender, der im 315 MHz-Bereich oder im 433 MHz-Bereich arbeitet.

Dieser Sender überträgt Daten aus der Reifendruckkontrolleinrichtung an einen außerhalb der Reifendruckkontrolleinrichtung liegenden Empfänger. Ein weiterer Empfänger ist in der Reifendruckkontrolleinrichtung selbst vorgesehen; er ist dazu eingerichtet, Daten von einem außerhalb der Reifendruckkontrolleinrichtung liegenden zweiten Sender zu empfangen, welcher in einem "zweiten" Frequenzbereich arbeitet, welcher vom ersten Frequenzbereich verschieden ist. Es ist bekannt, einen solchen zweiten Sender zu benutzen, um die Reifendruckkontrolleinrichtung zu triggern, damit sie einen Messvorgang und/oder einen Sendevorgang durchführt.

Die Reifendruckkontrolleinrichtung hat ferner eine Stromquelle für ihre Stromversorgung. Die Stromquelle kann eine langlebige Batterie sein. Die Stromquelle kann aber auch z. B. ein piezoelektrischer Generator sein, der auf Verformungen, Erschütterungen oder Beschleunigungen des Luftreifens reagiert, mittels des Piezoeffekts eine elektrische Spannung erzeugt und einen elektrischen Kondensator auflädt, aus welchem wiederholt der Strom für wenigstens einen Mess- und Sendevorgang entnommen werden kann. Ein solcher piezoelektrischer Generator ist z. B. aus der DE 603 10 104 T2 bekannt.

Es ist weiterhin bekannt, dass Fahrzeughersteller festlegen, wie eine für einen bestimmten Fahrzeugtyp vorgesehene Reifendruckkontrolleinrichtung zu arbeiten hat. Demgemäß ist die für einen ausgewählten Fahrzeugtyp bestimmte Reifendruckkontrolleinrichtung an diesen Fahrzeugtyp angepasst, um die Vorgaben des Fahrzeugherstellers zu erfüllen. Die Vorgaben variieren von Fahrzeughersteller zu Fahrzeughersteller und innerhalb der von einem Fahrzeughersteller angebotenen Fahrzeugmodelle zum Teil auch von Modell zu Modell. Für unterschiedliche Fahrzeugtypen sind deshalb zahlreiche unterschiedliche Reifendruckkontrolleinrichtungen auf dem Markt und müssen auf dem Aftermarket verfügbar sein und von Händlern bzw. Werkstätten vorrätig gehalten werden.

Auf dem Aftermarket sind bereits universell verwendbare, frei programmierbare Reifendruckkontrolleinrichtungen bekannt. Sie müssen in einer Automobilwerkstatt, in einer Reifenwerkstatt oder von einem Ersatzteilhändler mit einer für den jeweiligen Fahrzeugtyp spezifischen Software programmiert werden. Dies ist sehr aufwendig, da die Software entweder über das Internet heruntergeladen oder von einer Service-CD geladen und mit dieser Software die Reifendruckkontrolleinrichtung komplett neu programmiert werden muss. Die dazu erforderliche Übertragung von Programmcodes und Daten, welche die Software ausmachen, in den Speicher der Reifendruckkontrolleinrichtung geschieht üblicherweise drahtlos über einen LF-Kanal mit einer Frequenz von 125 kHz (LF bedeutet Low Frequency). Zu diesem Zweck enthalten bekannte "universelle" Reifendruckkontrolleinrichtungen, wie sie in der US 7,518,495 B2 beschrieben sind, einen Empfänger für 125 kHz-Signale.

Die Automobilwerkstatt oder Reifenwerkstatt, die eine universelle Reifendruckkontrolleinrichtung an einem Fahrzeug installieren will, benötigt dafür einen Zugang zum Internet bzw. einen Computer mit einer Programmierstation, um die gesamte Software in die Reifendruckkontrolleinrichtung zu übertragen. Der Umfang der zu übertragenden Programmcodes und Daten beträgt typisch einige 10 Kilobyte. Die Programmierung ist nicht nur zeitaufwendig, sondern auch störanfällig.

Aus der US 2013/0226403 A1 ist ein Verfahren und ein System gemäß den jeweiligen Oberbegriffen der Ansprüche 1, 11 und 17 bekannt. In den Reifendruckkontrolleinrichtungen, mit welchen dieses bekannte Verfahren arbeitet, sind zahlreiche Programme für unterschiedliche Fahrzeugtypen gespeichert. Für den Einsatz in einem bestimmten Fahrzeugtyp wird aus der Vielzahl der Programme das für den bestimmten Fahrzeugtyp passende Programm ausgewählt und aktiviert. Die übrigen Programme werden gelöscht oder inaktiviert. Nachteilig ist, dass die Reifendruckkontrolleinrichtung sehr viel Speicherplatz für die zahlreichen Programme benötigt.

Der vorliegenden Erfindung liegt die Aufgabe zugrunde, die Verwendung von Reifendruckkontrolleinrichtungen zu erleichtern und zu verbilligen.

Diese Aufgabe wird durch ein Verfahren mit den im Patentanspruch 1 angegebenen Merkmalen sowie durch ein Reifendruckkontrollsystem mit den im Patentanspruch 11 angegebenen Merkmalen und durch eine Reifendruckkontrolleinrichtung mit den im Patentanspruch 17 angegebenen Merkmalen gelöst. Vorteilhafte Weiterbildungen der Erfindung sind Gegenstand der abhängigen Ansprüche.

Erfindungsgemäß wird eine Reifendruckkontrolleinrichtung der eingangs genannten Art dadurch an einen bestimmten Fahrzeugtyp angepasst, dass in dem Speicher der Reifendruckkontrolleinrichtung zunächst eine Basisversion des Programms gespeichert wird, aus welcher mehrere unterschiedliche Vollversionen des Programms entwickelt werden können, um damit die Reifendruckkontrolleinrichtungen auszustatten, welche für unterschiedliche Fahrzeugtypen unterschiedliche technische Anforderungen erfüllen müssen, die z. B. vom Fahrzeughersteller vorgegeben sind. Mit dieser Basisversion des Programms können die Reifendruckkontrolleinrichtungen in den Handel kommen. Erst danach, wenn feststeht, für welchen Fahrzeugtyp eine solche Reifendruckkontrolleinrichtung verwendet werden soll, werden für diesen ausgewählten Fahrzeugtyp bestimmte Programmparameter im Speicher der Reifendruckkontrolleinrichtung gespeichert und verändern die ursprünglich gespeicherte Basisversion des Programms in eine an den ausgewählten Fahrzeugtyp angepasste Vollversion des Programms.

Das hat wesentliche Vorteile:
- Die Anpassung der Basisversion des Programms an den ausgewählten Fahrzeugtyp, für welchen die Reifendruckkontrolleinrichtung schließlich verwendet werden soll, lässt sich viel einfacher und schneller durchführen als eine bisher erforderliche komplette Programmierung der Reifendruckkontrolleinrichtung mit einer für den ausgewählten Fahrzeugtyp spezifischen Software.
- Für das Anpassen der Basisversion des Programms an den ausgewählten Fahrzeugtyp müssen der Händler auf dem Aftermarket und die Werkstatt, welche die Anpassung vornehmen soll, keine aufwendigen Geräte bereithalten. Es genügt ein handgroßes Gerät, mit welchem digitale Befehlssignale drahtlos oder leitungsgebunden in die Reifendruckkontrolleinrichtung übertragen werden können.

- Weil nur einige Programmparameter übertragen werden müssen, ist das Befehlssignal recht kurz. Seine Länge beträgt typisch nur zwischen 10 Byte und 30 Byte.
- Das Anpassen der Basisversion des Programms durch Laden von Programmparametern, welche für den ausgewählten Fahrzeugtyp spezifisch sind, lässt sich schnell durchführen.
- Das Anpassen der Basisversion des Programms durch Laden von Programmparametern, welche für den ausgewählten Fahrzeugtyp spezifisch sind, ist nicht anfällig für Fehler oder Störungen.
- Der größte Markt für Reifendruckkontrolleinrichtungen besteht in den USA, weil dort Reifendruckkontrollsysteme für Neufahrzeuge gesetzlich vorgeschrieben sind. Das erfindungsgemäße Verfahren hat den Vorteil, dass mit seiner Hilfe eine Reifendruckkontrolleinrichtung mit einer erfindungsgemäß veränderbaren Basisversion des Programms als Ersatz für rund 80 % der auf dem amerikanischen Markt vorhandenen, für den jeweiligen Fahrzeugtyp spezifischen, Reifendruckkontrolleinrichtungen verwendet werden kann.
- Die Befehlssignale, mit denen die Programmparameter zur Anpassung der Basisversion des Programms geladen werden, lassen sich mit handelsüblichen Geräten wie z. B. dem TECH400SD übertragen, die heute bereits zur Analyse von Reifendruckkontrollsystemen am Markt sind und digitale Befehlssignale mit einer Frequenz von 125 kHz übertragen können.
- Die Basisversion des Programms benötigt viel weniger Speicherplatz als das in der US 7,518,495 B2 und in der US 2013/0226403 A1 beschriebene Speichern von zahlreichen Komplettversionen von Programmen für die in Frage kommenden Fahrzeugtypen.

Bei den Programmparametern handelt es sich um bestimmte Werte, auf welche Variable eines Programms oder eines Unterprogramms eingestellt werden können. Mit ihnen lässt sich ein Programm anpassen und/oder flexibilisieren und/oder die Architektur eines Programms oder einer Software modifizieren.

Die Programmparameter können leitungsgebunden in den Speicher der Reifendruckkontrolleinrichtung übertragen werden. Das ist selbst bei Reifendruckkontrolleinrichtungen möglich, deren Schaltung mit einem Gießharz vergossen ist, denn z. B. kann das Gießharz mit elektrischen Kontaktnadeln durchstoßen werden, welche auf in oder unter dem Gießharz liegende Anschlusskontakte treffen. Um das zu erleichtern, können die Stellen der Oberfläche des Gießharzes, die durchstoßen werden sollen, markiert sein.

Vorzugsweise werden die Programmparameter drahtlos an einen in der Reifendruckkontrolleinrichtung vorgesehenen Empfänger übertragen. Die Übertragung erfolgt insbesondere mittels Funksignalen in einem "zweiten" Frequenzbereich an den "zweiten" Empfänger in der Reifendruckkontrolleinrichtung. Dafür genügt ein handgroßes Gerät mit einem Sender, bei dem es sich um den "zweiten" Sender im Sinne des Patentanspruchs 3 handelt, welcher in dem "zweiten" Frequenzbereich arbeitet. Dieser zweite Sender überträgt die Befehlssignale an den in der ausgewählten Reifendruckkontrolleinrichtung vorgesehenen zweiten Empfänger, welcher mit dem dort vorgesehenen Speicher und der dort vorgesehenen Schaltung zusammenarbeitet, von welcher wenigstens ein Teil digital arbeitet. Solche Geräte, die digitale Befehlssignale drahtlos an eine Reifendruckkontrolleinrichtung übertragen können, sind dem Fachmann bekannt. Ein Beispiel ist das "TPMS Diagnostic and Programming Tool TECH400SD" der Firma Bartec USA LLC in 44213 Phoenix Drive, Sterling Heights, Michigan 48314, USA.

Der zweite Sender, der die Befehlssignale mit den Programmparametern übertragen soll, arbeitet deshalb zweckmäßigerweise bei einer niedrigeren Frequenz als der erste Sender, insbesondere im Frequenzbereich von 50 kHz bis 300 kHz, vorzugsweise bei 125 kHz, weil die Reichweite dieser LF-Signale kürzer ist als die Reichweite der Signale, welche mit einer Frequenz von 315 MHz oder 433 MHz aus der Reifendruckkontrolleinrichtung heraus an einen außen liegenden, im Fahrzeug vorgesehenen Empfänger übertragen werden. Die geringere Reichweite ist kein Nachteil, denn das nur handgroße Gerät für die Übertragung der Programmparameter kann man der Reifendruckkontrolleinrichtung ohne weiteres dicht annähern. Die geringere Reichweite hat den Vorteil, dass die Programmparameter tatsächlich nur von der nächstliegenden Reifendruckkontrolleinrichtung wirksam empfangen und gespeichert werden, während weiter entfernt liegende Reifendruckkontrolleinrichtungen nicht gestört werden.

Da man bei der Herstellung patentgemäßer Reifendruckkontrolleinrichtungen noch nicht weiß, für welche Fahrzeugtypen sie einmal verwendet werden sollen, werden in der Basisversion des Programms die Programmparameter vorzugsweise lediglich mit vorläufigen Zahlenwerten gespeichert. Die vorläufig gespeicherten Zahlenwerte können im Prinzip beliebig gewählt werden. Sie müssen für keinen Fahrzeugtyp eine Überwachung des Reifendrucks ermöglichen. Vorzugsweise werden jedoch in der Reifendruckkontrolleinrichtung ab Werk solche Zahlenwerte der Programmparameter vorläufig gespeichert, die für wenigstens einen der vielen in Frage kommenden Fahrzeugtypen eine Überwachung des Reifendrucks ermöglichen. Vorzugsweise wählt man dafür einen häufig verwendeten Fahrzeugtyp aus. Wenn es mehrere Fahrzeugtypen gibt, bei welchen die Reifendruckkontrolleinrichtung mit denselben Programmparametern arbeiten kann, können auch diese Programmparameter als vorläufige Programmparameter ab Werk gespeichert werden.

Beim Aftermarkethändler oder in einer Automobilwerkstatt oder in einer Reifenwerkstatt werden die in der Basisversion des Programms gespeicherten vorläufigen Programmparameter geändert, um die Reifendruckkontrolleinrichtung an einen bestimmten Fahrzeugtyp anzupassen. Dazu werden die vorläufig gespeicherten Programmparameter vorzugsweise mit den nachträglich übertragenen, für den ausgewählten Fahrzeugtyp bestimmten Programmparametern überschrieben. In dem Zusammenhang können die in der Basisversion des Programms gespeicherten Programmparameter zunächst auf andere Speicherplätze kopiert und dadurch gesichert werden, bevor die nachträglich übertragenen, für den ausgewählten Fahrzeugtyp bestimmten Programmparameter gespeichert werden. Die Sicherung der ursprünglich gespeicherten Programmparameter ermöglicht es, die Reifendruckkontrolleinrichtung nach Bedarf wieder in ihren Ausgangszustand zurückzusetzen.

Als Programmparameter, welche von Fahrzeugtyp zu Fahrzeugtyp variieren können und deshalb in einer erfindungsgemäßen Reifendruckkontrolleinrichtung in einer Basisversion des Programms angelegt und nachträglich geändert werden können, kommen insbesondere die folgenden Parameter in Frage:
- Warnschwellen für eine unzureichende Stromversorgung. Eine ausreichende Stromversorgung ist für eine einwandfreie Funktion der Reifendruckkontrolleinrichtung unerlässlich. Es ist deshalb wichtig, dass dann, wenn die Spannung und/oder der Ladezustand einer in der Reifendruckkontrolleinrichtung vorgesehenen Batterie unter einen vorgegebenen Grenzwert absinken, oder wenn der Ladezustand eines Kondensators, welche durch einen piezoelektrischen Generator während der Fahrt wieder aufgeladen werden soll, wiederholt unter einen unteren Grenzwert absinkt oder wenn Sendevorgänge wegen unzureichender Stromversorgung nicht, nicht zum vorgesehenen Zeitpunkt oder nicht vollständig durchgeführt werden, ist eine Meldung an den Fahrer wichtig, damit er Abhilfe schaffen kann und nicht darauf vertraut, dass die Reifendruckkontrolleinrichtung fehlerfrei funktioniert.
- Programmparameter, die den Aufbau eines von der Reifendruckkontrolleinrichtung zu sendenden Datentelegramms festlegen. Je nach Fahrzeughersteller hat ein solches Datentelegramm unterschiedliche Inhalte, z. B. ausgewählt aus der Gruppe Druck, Druckdifferenz, Temperatur, Ladezustand der Batterie, Bewegungszustand des Rades, eine Kennung, welche die Reifendruckkontrolleinrichtung individualisiert, die Form einer Präambel, welche das Datentelegramm einleitet, und die Reihenfolge, in welcher die zu übertragenden Daten im Telegramm enthalten sind. So könnte ein Automobilhersteller vorschreiben, dass z. B. an erster Stelle nach der Präambel ein Drucksignal, an zweiter Stelle ein Druckdifferenzsignal, an dritter Stelle ein Temperaturwert, an vierter Stelle die Kennung, an fünfter Stelle der Ladezustand einer Batterie und an sechster Stelle eine Information steht, ob das Rad ruht oder sich dreht. Dies alles kann durch Programmparameter festgelegt werden, welche für den betreffenden Fahrzeugtyp spezifisch sind.
- Programmparameter, welche die Übertragungsgeschwindigkeit des "ersten" Senders festlegen, das ist der Sender, welcher sich in der Reifendruckkontrolleinrichtung befindet. Da die Übertragungsgeschwindigkeit, welche im Allgemeinen in Baud angegeben wird, von Sender und Empfänger übereinstimmen muss und der Empfänger im Fahrzeug vorgegeben ist, muss die Übertragungsgeschwindigkeit des Senders in der Reifendruckkontrolleinrichtung an die Übertragungsgeschwindigkeit angepasst werden, für welche der externe Empfänger ausgelegt ist. Die Anpassung kann durch einen entsprechenden Programmparameter bestimmt werden.
- Programmparameter, welche die Modulationsart des Senders in der Reifendruckkontrolleinrichtung festlegen. Auch die Modulationsart des Senders, Frequenzmodulation oder Amplitudenmodulation, muss auf den im Fahrzeug vorhandenen Empfänger abgestimmt sein, welcher für eine bestimmte Modulationsart ausgelegt ist, und kann durch einen Programmparameter festgelegt werden.
- Programmparameter, welche Zeitintervalle zwischen Messvorgängen und Zeitintervalle zwischen Sendevorgängen festlegen. Derartige Zeitintervalle sind normalerweise vom Fahrzeughersteller vorgegeben und müssen unter Umständen an die Funktionsweise des im Fahrzeug vorgesehenen Empfangsgerätes angepasst sein. Die Zeitintervalle können fest vorgegeben sein, sie können aber auch abhängig vom gemessenen Druck, von einem Druckabfall oder abhängig von der Geschwindigkeit des Fahrzeugs festgelegt sein. So ist es bekannt, die Häufigkeit von Druckmessvorgängen und von Sendevorgängen mit zunehmender Geschwindigkeit des Fahrzeugs zu steigern, wobei die Sendevorgänge nicht notwendigerweise genauso häufig erfolgen wie die Druckmessvorgänge. Es ist weiterhin bekannt, bei Überschreiten einer vorgegebenen Reifendruck-Abfallgeschwindigkeit die Druckmessrate und die Senderate zu erhöhen, um möglichst rasch Klarheit darüber zu erhalten, ob wirklich ein kritischer Druckabfall oder nur eine Fehlmessung vorliegt. Entsprechendes kann beim Überschreiten einer vorgegebenen Drucksteigerungsgeschwindigkeit vorgesehen werden. Unter welchen Umständen oder wann das geschehen soll, kann im Programm durch einen Programmparameter festgelegt werden.
- Ein Programmparameter, welcher den Typ der Codierung der von der Reifendruckkontrolleinrichtung zu sendenden Datentelegramme festlegt. Reifendruckkontrolleinrichtungen verwenden üblicherweise eine Manchester-Codierung. Von dieser gibt es unterschiedliche Typen, von denen der passende Typ durch Übertragen eines entsprechenden Programmparameters festgelegt werden kann.
- Programmparameter, welche festlegen, welche Zustände die Reifendruckkontrolleinrichtung einnehmen darf, welche Übergänge zwischen diesen Zuständen erlaubt sind und unter welchen Bedingungen sie erfolgen. Solche Zustände können z. B. diese sein:
   Ein Ruhezustand, in welchem das Fahrzeug länger als eine vorgegebene Zeitspanne steht. Diese Zeitspanne kann durch einen Programmparameter bestimmt werden. Es kann auch vorgegeben werden, ob im Ruhezustand Druckmessungen stattfinden und wenn ja, in welchen Zeitabständen, und ob Sendevorgänge stattfinden sollen, und wenn ja, in welchen Zeitabständen.
   Ein anderer Zustand ist der Normalzustand bei bewegtem Fahrzeug. Für diesen Zustand kann z. B. festgelegt werden, ab welcher Drehzahl des Rades, die von einem Beschleunigungssensor in der Reifendruckkontrolleinrichtung gemessen werden kann, der Übergang vom Ruhezustand in den normalen Bewegungszustand erfolgt. In diesem kann festgelegt werden, in welchen Zeitabständen normalerweise Druck und Temperatur gemessen werden, z. B. in Zeitabständen von 3 Sekunden, und in welchen Zeitabständen Sendevorgänge erfolgen sollen, z. B. in Zeitabständen von 60 Sekunden.
   Ein dritter Zustand kann der schnelle Sendemodus sein. In ihn wird die Reifendruckkontrolleinrichtung überführt, wenn der Reifendruck eine untere Schwelle unterschreitet oder wenn die Druckabfallgeschwindigkeit eine obere Schwelle überschreitet. Für den schnellen Sendemodus kann durch Programmparameter festgelegt werden, wie häufig in diesem Modus Messvorgänge und Sendevorgänge erfolgen, z. B. beide in Zeitabständen von 1 Sekunde.
- Ein Programmparameter, welcher die Frequenz festlegt, auf welcher der in der Reifendruckkontrolleinrichtung vorhandene Sender senden soll. Die Reifendruckkontrolleinrichtung kann z. B. darauf eingerichtet sein, wahlweise im Frequenzbereich von 433 MHz, welcher in Deutschland üblich ist, oder im Frequenzbereich von 315 MHz, welcher in den USA üblich ist, zu senden. Die Auswahl kann durch Eingeben eines entsprechenden Programmparameters getroffen werden.

Reifendruckkontrolleinrichtungen haben regelmäßig eine individuelle Kennung, welche sie als Bestandteil des Datentelegramms an den Empfänger im Fahrzeug übermitteln, damit dort festgestellt werden kann, von welchem Rad des Fahrzeugs das übertragene Datentelegramm stammt. In vorteilhafter Weiterbildung der Erfindung kann eine Kennung, die bereits in der Basisversion des Programms einer Reifendruckkontrolleinrichtung gespeichert wurde, nachträglich geändert werden. Das macht es möglich, in Fällen, in denen an einer bestimmten Radposition eines Fahrzeugs eine Reifendruckkontrolleinrichtung durch eine andere Reifendruckkontrolleinrichtung ersetzt wird, sei es, weil die bisherige Reifendruckkontrolleinrichtung defekt ist oder weil z. B. ein Sommerreifen gegen einen Winterreifen getauscht wird, die Kennung der bisherigen Reifendruckkontrolleinrichtung abzufragen und in die neue Reifendruckkontrolleinrichtung zu übertragen, welche an derselben Radposition an die Stelle der alten Reifendruckkontrolleinrichtung treten soll. Das hat den Vorteil, dass das zentrale Empfangsgerät im Fahrzeug im Falle eines solchen Austauschs keine neue Kennung lernen muss, sondern nach dem Austausch der Reifendruckkontrolleinrichtung sofort wieder voll funktionsfähig ist. Das Abfragen und Anzeigen der Kennung der zu ersetzenden Reifendruckkontrolleinrichtung kann z. B. mit dem Gerät TECH400SD erfolgen.

Für das Übertragen der Programmparameter, die für einen bestimmten Fahrzeugtyp bestimmt sind, verwendet man vorzugsweise ein drahtlos arbeitendes Übertragungsgerät, welches digitale Befehlssignale übermittelt und mit LF-Codes arbeitet, welche die digitale Schaltung in der Reifendruckkontrolleinrichtung zu interpretieren vermag. Ein geeignetes Übertragungsgerät ist z. B. das bereits erwähnte TECH400SD. Auf diesem Übertragungsgerät kann für die in Frage kommenden unterschiedlichen Fahrzeugtypen z. B. ein Menü installiert werden, vorzugsweise ein Pulldown-Menü, welches für eine Anzahl von Fahrzeugtypen die erforderlichen Programmparameter enthält, vorzugsweise jeweils unter der Typenbezeichnung des betreffenden Fahrzeugs abgelegt, so dass durch Eingeben der Typenbezeichnung die zugehörigen Programmparameter abgerufen werden können. Das Menü kann entweder vom Hersteller des Übertragungsgeräts vorinstalliert sein oder aus dem Internet auf das Übertragungsgerät heruntergeladen werden oder von einer CD-ROM oder von einem anderen Datenträger in das Übertragungsgerät eingelesen werden, welche vom Hersteller des Übertragungsgeräts oder vom Hersteller der erfindungsgemäßen Reifendruckkontrolleinrichtung mitgeliefert werden kann. Das Gerät TECH400SD hat beispielsweise einen Schlitz, in welchen eine sichere digitale Speicherkarte (SD Card) gesteckt werden kann, um Software-Updates zu ermöglichen. Auf diese Weise kann auch ein solches Pulldown-Menü geladen werden. Um die Übertragung der erforderlichen Programmparameter vorzunehmen, muss dann lediglich der passende Satz von Programmparametern, welcher durch die Typenangabe des Fahrzeugs bezeichnet sein kann, aufgerufen und die Übertragung in den Speicher der Reifendruckkontrolleinrichtung gestartet werden. Die Übertragung ist in Sekundenschnelle abgeschlossen. Danach können die übertragenen Programmparameter gegen weitere Änderungen gesichert werden, insbesondere durch ein willkürlich ausgelöstes Befehlssignal.

Anstatt mit einem Übertragungsgerät wie dem TECH400SD können die Programmparameter auch mit einem Mobiltelefon, insbesondere mit einem Smartphone, übertragen werden, wenn dieses mit einer Schnittstelle ausgestattet ist, über welche Daten mit Funksignalen in dem zweiten Frequenzbereich übertragen werden können.

Ein System aus einem solchen Übertragungsgerät mit einem Menü zum Auswählen eines Satzes von Programmparametern, welche zu einem ausgewählten Fahrzeugtyp gehören, und mit einem oder mehreren Reifendruckkontrolleinrichtungen der eingangs genannten Art, in welche ein ausgewählter Satz von Programmparametern zu übertragen ist, ist Gegenstand des Patentanspruchs 11.

Das Reifendruckkontrollsystem besteht aus einer oder mehreren Reifendruckkontrolleinrichtungen, welche zum Anbringen an ein Rad eines mit Luftreifen versehenen Fahrzeugs eingerichtet sind und eine Einrichtung zum Messen des im Luftreifen herrschenden Luftdrucks (Reifendruck) oder einer Änderung des Reifendrucks, gegebenenfalls noch eine oder mehrere Einrichtungen zum Messen anderer Messgrößen als den Reifendruck, eine elektrische oder elektronische Schaltung, von welcher wenigstens ein Teil digital arbeitet, zum Steuern der Reifendruckkontrolleinrichtung und gegebenenfalls zum Verarbeiten der von den Messeinrichtungen gelieferten Messwerte, einen Speicher, in welchem ein Programm für die Schaltung gespeichert ist, eine elektrische Stromquelle für die Stromversorgung der Reifendruckkontrolleinrichtung, einen in einem ersten Frequenzbereich arbeitenden ersten Sender zum Übertragen von Daten aus der Reifendruckkontrolleinrichtung an einen außerhalb der Reifendruckkontrolleinrichtung liegenden ersten Empfänger haben,
und aus einem digital arbeitenden Übertragungsgerät, in welchem unter mehreren Adressen, welche auswählbaren Fahrzeugtypen entsprechen, jeweils ein Satz von Programmparametern abgelegt ist, der dazu bestimmt ist, nach Auswahl eines solchen Satzes, der für einen ausgewählten Fahrzeugtyp spezifisch ist, in den Speicher der Reifendruckkontrolleinrichtung übertragen zu werden, um durch Einfügen der ausgewählten Programmparameter in eine in der Reifendruckkontrolleinrichtung bereits gespeicherte Basisversion eines Programms diese in eine für den ausgewählten Fahrzeugtyp geeignete Vollversion des Programms zu überführen, mit welcher die Reifendruckkontrolleinrichtung den Reifendruck eines Rades an eben diesem ausgewählten Fahrzeugtyp kontrollieren kann.

Bevorzugte Ausgestaltungen des Systems sind Gegenstand der Unteransprüche des Patentanspruchs 11.

Die Programmparameter können leitungsgebunden in den Speicher der Reifendruckkontrolleinrichtung übertragen werden. Bei Reifendruckkontrolleinrichtungen, deren Schaltung mit einem Gießharz vergossen ist, kann zu diesem Zweck das Gießharz an besonders markierten Stellen seiner Oberfläche mit elektrischen Kontaktnadeln durchstoßen werden, welche auf Anschlusskontakte treffen, die unter den markierten Stellen liegen.

Besser ist es, die Programmparameter drahtlos an einen in der jeweiligen Reifendruckkontrolleinrichtung liegenden zweiten Empfänger zu senden, welcher dazu eingerichtet ist, Daten von einem außerhalb der Reifendruckkontrolleinrichtung liegenden Sender zu empfangen, der in einem zweiten Frequenzbereich arbeitet. In diesem Fall weist das Übertragungsgerät den in dem zweiten Frequenzbereich sendenden zweiten Sender auf.

Bei dem Übertragungsgerät muss es sich nicht um ein spezialisiertes Gerät wie das TECH400SD handeln. Es ist ein Vorteil der vorliegenden Erfindung, dass das Übertragungsgerät auch ein Mobiltelefon sein kann, insbesondere ein Smartphone. Mobiltelefone, die eine Schnittstelle für die Ausgabe von Daten haben, sind bereits bekannt. In dem erfindungsgemäßen System kann deshalb mit Vorteil ein Mobiltelefon eingesetzt werden, welches eine Schnittstelle für die Ausgabe von Daten hat, zu denen die zu übertragenden Programmparameter gehören. Damit die Übertragung drahtlos erfolgen kann, ist eine Baugruppe vorgesehen, die als ein gesondertes Modul ausgebildet sein kann und an die Schnittstelle des Mobiltelefons anschließbar ist. Vorzugsweise kann das Modul mit dem Mobiltelefon fest, z. B. steckbar, verbunden werden, so dass das Mobiltelefon und das Modul wie eine Einheit gehandhabt werden können. Diese Baugruppe enthält den in dem zweiten Frequenzbereich arbeitenden Sender sowie eine Steuereinrichtung, welche die über die Schnittstelle ausgegebenen Programmparameter empfängt und den Sender der Baugruppe so steuert, dass dieser die Programmparameter an den zweiten Empfänger in der Reifendruckkontrolleinrichtung überträgt. Der in der Baugruppe vorgesehene Sender ist mit seiner Sendefrequenz auf den Frequenzbereich abgestimmt, in welchem der in der Reifendruckkontrolleinrichtung vorgesehene zweite Empfänger empfangen kann, insbesondere auf 125 KHz.

Üblicherweise ist in der Reifendruckkontrolleinrichtung ein Speicher zusammen mit der Einrichtung zum Messen des Reifendrucks in einen integrierten Schaltkreis, z. B. in einen anwendungsspezifischen integrierten Schaltkreis (ASIC), in einen Microcontroller oder in einen Microprozessor, integriert. Der integrierte Schaltkreis kann weitere Sensoren enthalten, z. B. einen Beschleunigungssensor und/oder einen Temperatursensor. Er kann darüber hinaus Aufgaben zur Auswertung oder Vorauswertung der gewonnenen Messwerte und zur Steuerung der Reifendruckkontrolleinrichtung übernehmen.

Bei den bekannten Reifendruckkontrolleinrichtungen ist der Speicher nicht groß genug, um eine allen auf dem Markt befindlichen Reifendruckkontrollsystemen genügende Basissoftware aufzunehmen. In vorteilhafter Weiterbildung der Erfindung ist deshalb vorgesehen, in der Reifendruckkontrolleinrichtung außerhalb des integrierten Schaltkreises einen gesonderten Zusatzspeicher vorzusehen, insbesondere einen EPROM oder EEPROM. Zwischen dem integrierten Schaltkreis mit seinem Speicher auf der einen Seite und dem Zusatzspeicher auf der anderen Seite soll eine Leitungsverbindung bestehen, über welche eine Kommunikation zwischen dem integrierten Schaltkreis und seinem Speicher auf der einen Seite und dem Zusatzspeicher auf der anderen Seite möglich ist. Die Basissoftware kann dann teils im Speicher des integrierten Schaltkreises und teils im Zusatzspeicher gespeichert sein. Der Zusatzspeicher kann so dimensioniert sein, dass er eine Basissoftware aufnehmen kann, die einer größere Anzahl von Reifendruckkontrollsystemen genügt als dies allein mit dem im integrierten Schaltkreis verfügbaren Speicher möglich wäre. Der Zusatzspeicher wird bevorzugt so bemessen, dass er eine Basissoftware aufnehmen kann, die für alle oder fast alle am Markt befindliche Reifendruckkontrollsysteme verwendet werden kann.

Die Kommunikation zwischen dem im integrierten Schaltkreis vorgesehenen Speicher und dem Zusatzspeicher erfolgt vorzugsweise verschlüsselt. Damit kann verhindert werden, dass über die Leitungsverbindung zwischen dem integrierten Schaltkreis und dem Zusatzspeicher Daten abgefangen und bisher unbekannte Betriebssoftware der Reifendruckkontrolleinrichtung analysiert werden kann.

Eine erfindungsgemäße Reifendruckkontrolleinrichtung, welche zum Anbringen an ein Rad eines mit Luftreifen versehenen Fahrzeugs eingerichtet ist, und eine Einrichtung zum Messen des im Luftreifen herrschenden Luftdrucks (Reifendruck) oder einer Änderung des Reifendrucks, eine elektrische oder elektronische Schaltung, von welcher wenigstens ein Teil digital arbeitet, zum Steuern der Reifendruckkontrolleinrichtung, einen Speicher, in welchem ein Programm für die Schaltung gespeichert ist, eine elektrische Stromquelle für die Stromversorgung der Reifendruckkontrolleinrichtung, sowie einen in einem ersten Frequenzbereich arbeitenden ersten Sender zum Übertragen von Daten aus der Reifendruckkontrolleinrichtung an einen außerhalb der Reifendruckkontrolleinrichtung liegenden ersten Empfänger hat, ist erfindungsgemäß vorzugsweise dadurch gekennzeichnet, dass ein erster Speicher der Reifendruckkontrolleinrichtung zusammen mit der Einrichtung zum Messen des Reifendrucks in einen integrierten Schaltkreis integriert ist, dass in der Reifendruckkontrolleinrichtung außerdem ein gesonderter Zusatzspeicher vorgesehen ist, wobei der erste Speicher und der Zusatzspeicher zusammengenommen den Speicher der Reifendruckkontrolleinrichtung bilden, und dass zwischen dem ersten Speicher (5) im integrierten Schaltkreis und dem Zusatzspeicher eine Leitungsverbindung besteht, über welche eine Kommunikation zwischen dem ersten Speicher und dem Zusatzspeicher möglich ist. Darin ist der Zusatzspeicher vorzugsweise ein EPROM oder ein EEPROM. Eine solche Reifendruckkontrolleinrichtung eignet sich besonders zur Verwendung in einem erfindungsgemäßen Verfahren und in einem erfindungsgemäßen Reifendruckkontrollsystem.

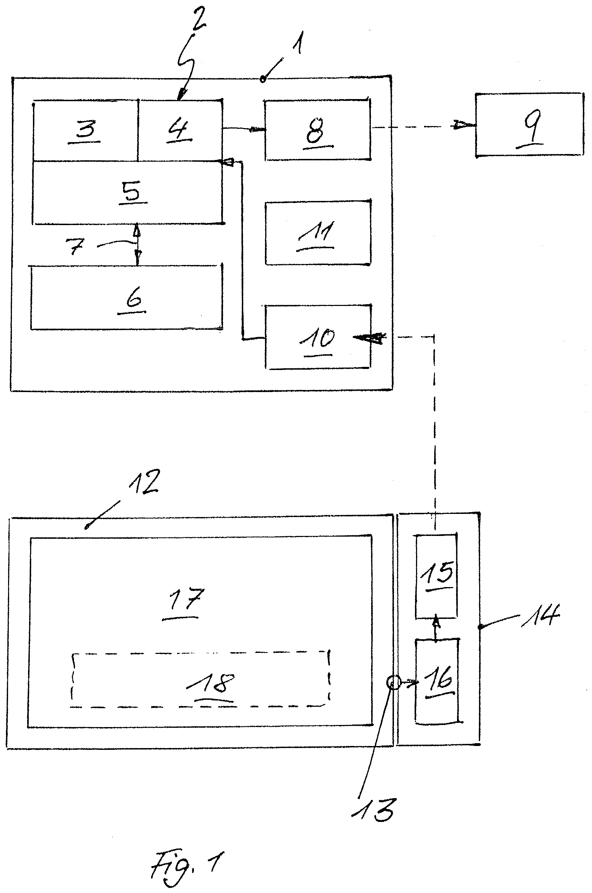

Die beigefügte Figur 1 zeigt schematisch in einer Blockdarstellung den Aufbau eines erfindungsgemäßen Reifendruckkontrollsystems.

Das System umfasst mindestens eine Reifendruckkontrolleinrichtung 1 mit einem integrierten Schaltkreis 2, in welchem unter anderem ein Drucksensor 3 zur Messung des Reifendrucks, eine Steuer- und Auswerteschaltung 4 und ein erster Speicher 5 ausgebildet sind. Neben dem integrierten Schaltkreis 2 gibt es in der Reifendruckkontrolleinrichtung 1 einen Zusatzspeicher 6, z. B. ein EPROM oder ein EEPROM. Der Zusatzspeicher 6 hat eine Leitungsverbindung 7 mit dem integrierten Schaltkreis 2. Der Datenverkehr zwischen dem integrierten Schaltkreis 2 und dem Zusatzspeicher 6 erfolgt bevorzugt verschlüsselt.

Der integrierte Schaltkreis 2 steuert einen ersten Sender 8, welcher z. B. auf der für Reifendruckkontrollsysteme vorgesehenen Frequenz von 433 MHz sendet. Der Sender überträgt Daten, insbesondere den Reifendruck oder davon abgeleitete Größen, eine Kennung und gegebenenfalls weitere ihm vom integrierten Schaltkreis 2 zur Verfügung gestellte Daten per Funk an einen außerhalb der Reifendruckkontrolleinrichtung 1 vorgesehenen Empfänger 9, welcher sich an geeigneter Stelle in einem Fahrzeug oder an der Unterseite eines Fahrzeugs befindet, an welchem ein Rad montiert ist, welches mit der Reifendruckkontrolleinrichtung 1 ausgestattet ist. Ein zweiter Empfänger 10 ist in der Reifendruckkontrolleinrichtung 1 vorgesehen; er soll auf einer Frequenz empfangen, die von der Frequenz, mit welcher der erste Sender 8 sendet, verschieden ist, insbesondere niedriger ist als die Frequenz des Senders 8. Besonders bevorzugt ist es, wenn der zweite Empfänger auf eine Frequenz von 125 KHz abgestimmt ist.

Eine Batterie 11 versorgt die Bestandteile der Reifendruckkontrolleinrichtung 1 mit der für ihren Betrieb nötigen elektrischen Energie.

In den Speichern 5 und 6 der Reifendruckkontrolleinrichtung 1 befindet sich ab Werk eine Basissoftware, die durch Übertragung von wenigen Programmparametern im Umfang von nicht mehr als 20 bis 30 Byte zu einer für eine bestimmte Fahrzeugtype passenden Vollversion einer Betriebssoftware für die Reifendruckkontrolleinrichtung 1 ergänzt oder durch Überschreiben von voreingestellten Programmparametern geändert werden kann. Um diese wenigen Programmparameter in die Reifendruckkontrolleinrichtung 1 zu übertragen, ist z. B. ein Smartphone 12 vorgesehen, welches eine leitungsgebundene Schnittstelle 13 hat, über welche digitale Daten ausgegeben werden können. An diese Schnittstelle 13 kann ein Modul 14 angedockt werden, welches einen zweiten Sender 15 hat, dessen Sendefrequenz auf die Frequenz des in der Reifendruckkontrolleinrichtung 1 vorgesehenen zweiten Empfängers 10 abgestimmt ist. Ferner ist in dem Modul 14 eine Steuerschaltung 16 vorgesehen, z. B. ein Microcontroller, welche über die Schnittstelle 13 Daten erhält, die sie mittels des von ihr gesteuerten zweiten Senders 15 in die Reifendruckkontrolleinrichtung 1 überträgt. Diese Daten enthalten Programmparameter, die mit einer softwaremäßig auf dem Display 17 des Smartphones 12 dargestellten Tastatur 18 ausgewählt und aus einem im Smartphone 12 oder in dem Modul 14, z. B. im Microcontroller 16, vorgesehenen Speicher abgerufen oder in das Smartphone eingegeben werden können, um die in der Reifendruckkontrolleinrichtung 1 bereits gespeicherte Basissoftware zu einer für den gewünschten Fahrzeugtyp vorgesehenen Vollversion der Betriebssoftware für die Reifendruckkontrolleinrichtung 1 zu ergänzen.

Das Smartphone 12 kann außerdem dafür genutzt werden, um mit ihm Daten aus der Reifendruckkontrolleinrichtung 1 abzufragen, z. B. den aktuellen Reifendruck.

### Bezugszeichenliste

- 1: Reifendruckkontrolleinrichtung
- 2: integrierter Schaltkreis
- 3: Drucksensor
- 4: Steuer- und Auswerteschaltung
- 5: erster Speicher
- 6: Zusatzspeicher
- 7: Leitungsverbindung
- 8: erster Sender
- 9: erster Empfänger
- 10: zweiter Empfänger
- 11: Batterie, Stromquelle
- 12: Smartphone, Mobiltelefon
- 13: leitungsgebundene Schnittstelle
- 14: Modul, Baugruppe
- 15: zweiter Sender
- 16: Steuerschaltung
- 17: Display
- 18: Tastatur

## Patentansprüche

1. Verfahren zum Anpassen einer Reifendruckkontrolleinrichtung (1) an einen Fahrzeugtyp, wobei die Reifendruckkontrolleinrichtung (1) zum Anbringen an ein Rad eines mit Luftreifen versehenen Fahrzeugs eingerichtet ist,
und
eine Einrichtung (3) zum Messen des im Luftreifen herrschenden Luftdrucks (Reifendruck) oder einer Änderung des Reifendrucks,
optional noch eine oder mehrere Einrichtungen zum Messen anderer Messgrößen als den Reifendruck,
eine elektrische Schaltung (4), von welcher wenigstens ein Teil digital arbeitet, zum Steuern der Reifendruckkontrolleinrichtung (1) und optional zum Verarbeiten der von den Messeinrichtungen (3) gelieferten Messwerte,
einen Speicher (5, 6), in welchem ein Programm für die Schaltung (4) gespeichert ist,
eine elektrische Stromquelle (11) für die Stromversorgung der Reifendruckkontrolleinrichtung (1), und
einen in einem ersten Frequenzbereich arbeitenden ersten Sender (8) zum Übertragen von Daten aus der Reifendruckkontrolleinrichtung (1) an einen außerhalb der Reifendruckkontrolleinrichtung (1) liegenden ersten Empfänger (9) hat,
**dadurch gekennzeichnet,**
**dass** in dem Speicher (5, 6) zunächst nur eine Basisversion des Programms gespeichert wird, aus welcher mehrere unterschiedliche Versionen des Programms für mehrere Fahrzeugtypen entwickelt werden können, und dass für einen ausgewählten Fahrzeugtyp eine passende Vollversion dadurch erzeugt wird, dass für den ausgewählten Fahrzeugtyp bestimmte Programmparameter nachträglich im Speicher (5, 6) der Reifendruckkontrolleinrichtung (1) gespeichert werden.

2. Verfahren nach Anspruch 1, **dadurch gekennzeichnet, dass** die Reifendruckkontrolleinrichtung (1) einen Eingang hat, über welchen die Programmparameter leitungsgebunden in den Speicher (5, 6) übertragen werden.

3. Verfahren nach Anspruch 1 oder 2, **dadurch gekennzeichnet, dass** ein zweiter Empfänger (10) in der Reifendruckkontrolleinrichtung (1) vorgesehen ist, welcher dazu eingerichtet ist, Daten von einem außerhalb der Reifendruckkontrolleinrichtung (1) liegenden, in einem zweiten Frequenzbereich arbeitenden zweiten Sender (15) zu empfangen, und dass die Programmparameter mittels Funksignalen in dem zweiten Frequenzbereich an den zweiten Empfänger (10) übertragen werden.

4. Verfahren nach Anspruch 3, **gekennzeichnet durch** die Verwendung eines zweiten Senders (15), der bei einer niedrigeren Frequenz als der erste Sender (8) arbeitet.

5. Verfahren nach Anspruch 3 oder 4, **dadurch gekennzeichnet, dass** die Programmparameter mit einem Mobiltelefon (12) oder mit einem Smartphone in den Speicher (5, 6) der Reifendruckkontroll-einrichtung (1) übertragen werden, welches mit einer Schnittstelle (13) ausgestattet ist, über welche Funksignale in dem zweiten Frequenzbereich gesendet werden können.

6. Verfahren nach einem der Ansprüche 3 bis 5, **gekennzeichnet durch** die Verwendung einer Basisversion des Programms, in welcher Programmparameter mit vorläufigen Zahlenwerten gespeichert sind.

7. Verfahren nach Anspruch 6, **dadurch gekennzeichnet, dass** die vorläufig gespeicherten Zahlenwerte der Programmparameter so gewählt werden, dass sie für wenigstens einen Fahrzeugtyp eine Überwachung des Reifendrucks ermöglichen.

8. Verfahren nach Anspruch 6 oder 7, **dadurch gekennzeichnet, dass** die in der Basisversion des Programms gespeicherten vorläufigen Programmparameter im Speicher (5, 6) mit den nachträglich übertragenen, für den ausgewählten Fahrzeugtyp bestimmten Programmparametern überschrieben werden.

9. Verfahren nach einem der vorstehenden Ansprüche, **dadurch gekennzeichnet, dass** ein oder mehrere Programmparameter aus der folgenden Gruppe von Programmparametern im Speicher (5, 6) der Reifendruckkontrolleinrichtung (1) gespeichert werden:
Warnschwellen für eine unzureichende Stromversorgung;
Programmparameter, die den Aufbau eines von der Reifendruckkontrolleinrichtung (1) zu sendenden Datentelegramms festlegen;
Programmparameter, welche die Übertragungsgeschwindigkeit des ersten Senders (8) festlegen;
Programmparameter, welche die Modulationsart des ersten Senders (8) festlegen;
Programmparameter, welche Zeitintervalle zwischen Messvorgängen und Zeitintervalle zwischen Sendevorgängen druckabhängig und/oder geschwindigkeitsabhängig festlegen,
Programmparameter, welche den Typ der Codierung eines von der Reifendruckkontrolleinrichtung (1) zu sendenden Datentelegramms festlegen;
Programmparameter, welche festlegen, welche Zustände die Reifendruckkontrolleinrichtung (1) einnehmen darf, welche Übergänge zwischen diesen Zuständen erlaubt sind und unter welchen Bedingungen sie erfolgen;
ein Programmparameter, welcher die Frequenz festlegt, auf welcher der erste Sender (8) sendet;
Programmparameter, welche die Zeitintervalle zwischen den Messvorgängen und/oder zwischen den Sendevorgängen abhängig vom Reifendruck und/oder abhängig von der Reifendruck-Abfallgeschwindigkeit und/oder abhängig von der Fahrzeuggeschwindigkeit festlegen.

10. Verfahren nach einem der vorstehenden Ansprüche, **dadurch gekennzeichnet, dass** als Programmparameter bereits in der Basisversion des Programms eine Kennung im Speicher (5, 6) einer ersten Reifendruckkontrolleinrichtung (1) gespeichert wird, welche die erste Reifendruckkontrolleinrichtung (1) individualisiert, und dass diese Kennung nachträglich mit der Kennung einer zweiten Reifendruckkontrolleinrichtung überschrieben wird, welche an einer gleichbleibenden Radposition des Fahrzeugs durch die erste Reifendruckkontrolleinrichtung (1) ersetzt wird.

11. System
aus einer oder mehreren Reifendruckkontrolleinrichtungen (1), welche zum Anbringen an ein Rad eines mit Luftreifen versehenen Fahrzeugs eingerichtet sind und
eine Einrichtung (3) zum Messen des im Luftreifen herrschenden Luftdrucks (Reifendruck) oder einer Änderung des Reifendrucks, gegebenenfalls noch eine oder mehrere Einrichtungen zum Messen anderer Messgrößen als den Reifendruck,
eine elektrische oder elektronische Schaltung (4), von welcher wenigstens ein Teil digital arbeitet, zum Steuern der Reifendruckkontrolleinrichtung (1) und gegebenenfalls zum Verarbeiten der von den Messeinrichtungen (3) gelieferten Messwerte,
eine elektrische Stromquelle (11) für die Stromversorgung der Reifendruckkontrolleinrichtung (1),
sowie einen in einem ersten Frequenzbereich arbeitenden ersten Sender (8) zum Übertragen von Daten aus der Reifendruckkontrolleinrichtung (1) an einen außerhalb der Reifendruckkontrolleinrichtung (1) liegenden ersten Empfänger (9) hat, **dadurch gekennzeichnet, dass** dieses System weiterhin einen Speicher (5, 6) hat, wobei in dem Speicher (5, 6) nur eine Basisversion eines Programms für die Schaltung (4) gespeichert ist, aus welcher eine Vollversion des Programms erzeugt werden kann, indem für einen auswählbaren Fahrzeugtyp bestimmte Programmparameter in den Speicher (5, 6) übertragen und darin gespeichert werden,
und
aus einem digital arbeitenden Übertragungsgerät (12), in welchem unter mehreren Adressen, welche auswählbaren Fahrzeugtypen entsprechen, jeweils ein Satz der Programmparameter abgelegt ist, der dazu bestimmt ist, nach Auswahl eines solchen Satzes, der für einen ausgewählten Fahrzeugtyp spezifisch ist, in den Speicher (5, 6) der Reifendruckkontrolleinrichtung (1) übertragen zu werden, um durch Einfügen der ausgewählten Programmparameter in die in der Reifendruckkontrolleinrichtung (1) bereits gespeicherte Basisversion des Programms diese in eine für den ausgewählten Fahrzeugtyp geeignete Vollversion des Programms zu überführen, mit welcher die Reifendruckkontrolleinrichtung (1) den Reifendruck eines Rades an eben diesem ausgewählten Fahrzeugtyp kontrollieren kann.

12. System nach Anspruch 11, in welchem die Sätze von Programmparametern in dem Übertragungsgerät (12) in Form eines Pulldown-Menüs vorliegen.

13. System nach Anspruch 11 oder 12, **dadurch gekennzeichnet, dass** ein zweiter Empfänger (10), welcher dazu eingerichtet ist, Daten von einem außerhalb der Reifendruckkontrolleinrichtung (1) liegenden, in einem zweiten Frequenzbereich arbeitenden zweiten Sender (15) zu empfangen, in der Reifendruckkontrolleinrichtung (1) vorgesehen ist und dass das Übertragungsgerät (12) den in dem zweiten Frequenzbereich sendenden zweiten Sender (15) aufweist.

14. System nach Anspruch 13, **dadurch gekennzeichnet, dass** das Übertragungsgerät (12) ein Mobiltelefon ist oder enthält, insbesondere ein Smartphone,
dass das Mobiltelefon (12) eine Schnittstelle (13) für die Ausgabe von Daten hat, zu denen die zu übertragenden Programmparameter gehören,
und dass an diese Schnittstelle (13) eine Baugruppe (14) anschließbar ist, welche Bestandteil des Systems ist und den in dem zweiten Frequenzbereich arbeitenden Sender (15) sowie eine Steuerschaltung (16) enthält, welche über die Schnittstelle (13) ausgegebene Programmparameter empfängt und den Sender (15) so steuert, dass er die Programmparameter an den zweiten Empfänger (10) überträgt.

15. System nach einem der Ansprüche 11 bis 14, **dadurch gekennzeichnet, dass** ein erster Speicher (5) der Reifendruckkontrolleinrichtung (1) zusammen mit der Einrichtung (3) zum Messen des Reifendrucks in einen integrierten Schaltkreis (2) integriert ist,
dass in der Reifendruckkontrolleinrichtung (1) außerdem ein gesonderter Zusatzspeicher (6) vorgesehen ist, wobei der erste Speicher (5) und der Zusatzspeicher (6) zusammengenommen den Speicher (5, 6) der Reifendruckkontrolleinrichtung (1) bilden,
dass zwischen dem ersten Speicher (5) im integrierten Schaltkreis (2) und dem Zusatzspeicher (6) eine Leitungsverbindung (7) besteht, über welche eine Kommunikation zwischen dem ersten Speicher (5) und dem Zusatzspeicher (6) möglich ist,
und dass die Basisversion des Programms teils im ersten Speicher (5) des integrierten Schaltkreises (2) und teils im Zusatzspeicher (6) gespeichert ist.

16. Verfahren nach einem der Ansprüche 1 bis 10, welches in einem System nach Anspruch 15 durchgeführt wird, **dadurch gekennzeichnet, dass** die Kommunikation zwischen dem ersten Speicher (5) im integrierten Schaltkreis (2) und dem Zusatzspeicher (6) verschlüsselt erfolgt.

17. Reifendruckkontrolleinrichtung, welche zum Anbringen an ein Rad eines mit Luftreifen versehenen Fahrzeugs eingerichtet ist, und
eine Einrichtung (3) zum Messen des im Luftreifen herrschenden Luftdrucks (Reifendruck) oder einer Änderung des Reifendrucks,
eine elektrische oder elektronische Schaltung (4), von welcher wenigstens ein Teil digital arbeitet, zum Steuern der Reifendruckkontrolleinrichtung (1),
einen Speicher (5, 6), in welchem ein Programm für die Schaltung (4) gespeichert ist,
eine elektrische Stromquelle (11) für die Stromversorgung der Reifendruckkontrolleinrichtung (1),
und einen in einem ersten Frequenzbereich arbeitenden ersten Sender (8) zum Übertragen von Daten aus der Reifendruckkontrolleinrichtung (1) an einen außerhalb der Reifendruckkontrolleinrichtung (1) liegenden ersten Empfänger (9) hat,
**dadurch gekennzeichnet,** diese Reifendruckkontrolleinrichtung weiterhin einen Speicher (5, 6) hat, wobei in dem Speicher (5, 6) nur eine Basisversion eines Programms für die Schaltung (4) gespeichert ist, aus welcher eine Vollversion des Programms erzeugt werden kann, indem für einen auswählbaren Fahrzeugtyp bestimmte Programmparameter in den Speicher (5, 6) übertragen und darin gespeichert werden, und dass ein erster Speicher (5) der Reifendruckkontrolleinrichtung (1) zusammen mit der Einrichtung (3) zum Messen des Reifendrucks in einen integrierten Schaltkreis (2) integriert ist,
dass in der Reifendruckkontrolleinrichtung (1) außerdem ein gesonderter Zusatzspeicher (6) vorgesehen ist, wobei der erste Speicher (5) und der Zusatzspeicher (6) zusammengenommen den Speicher (5, 6) der Reifendruckkontrolleinrichtung (1) bilden,
und dass zwischen dem ersten Speicher (5) im integrierten Schaltkreis (2) und dem Zusatzspeicher (6) eine Leitungsverbindung (7) besteht, über welche eine Kommunikation zwischen dem ersten Speicher (5) und dem Zusatzspeicher (6) möglich ist.

18. Die Verwendung einer Reifendruckkontrolleinrichtung nach Anspruch 17 in einem Verfahren gemäß einem der Ansprüche 1 bis 10 und 16.

19. Die Verwendung einer Reifendruckkontrolleinrichtung nach Anspruch 17 in einem System gemäß einem der Ansprüche 11 bis 15.

## Claims

1. A method for adapting a tire pressure monitoring device (1) to a vehicle type, wherein the tire pressure monitoring device (1) is configured for mounting on a wheel of a vehicle provided with pneumatic tires
and has
a device (3) for measuring the air pressure (tire pressure) present in the pneumatic tire or for measuring a change of the tire pressure,
optionally also one or more devices for measuring variables other than the tire pressure,
an electrical circuit (4), of which at least a part operates digitally, for controlling the tire pressure monitoring device (1) and optionally for processing the measured values delivered by the measuring devices (3),
a memory (5, 6), in which a program for the circuit (4) is stored,
an electrical power source (11) for the power supply of the tire pressure monitoring device (1), and
a first transmitter (8) operating in a first frequency range configured for the transmission of data from the tire pressure monitoring device (1) to a first receiver (9) located outside the tire pressure monitoring device (1),
**characterised in that**
merely a basic version of the program is initially stored in the memory (5, 6), from which a plurality of different versions of the program can be developed for a plurality of vehicle types, and **in that** an appropriate full version for a selected vehicle type is generated **in that**, for the selected vehicle type, certain program parameters are stored subsequently in the memory (5, 6) of the tire pressure monitoring device (1).

2. The method according to Claim 1, **characterised in that** the tire pressure monitoring device (1) has an input, via which the program parameters can be transmitted into the memory (5, 6) in a wired manner.

3. The method according to Claim 1 or 2, **characterised in that** a second receiver (10) is provided in the tire pressure monitoring device (1) and is configured to receive data from a second transmitter (15), which is located outside the tire pressure monitoring device (1) and operates in a second frequency range, and **in that** the program parameters are transmitted to the second receiver (10) by means of radio signals in the second frequency range.

4. The method according to Claim 3, **characterised by** the use of a second transmitter (15), which operates at a frequency that is lower than that of the first transmitter (8).

5. The method according to Claim 3 or 4, **characterised in that** the program parameters are transmitted into the memory (5, 6) of the tire pressure monitoring device (1) with a mobile telephone (12) or with a Smartphone, which is equipped with an interface (13) via which radio signals can be transmitted in the second frequency range.

6. The method according to any one of Claims 3 to 5, **characterised by** the use of a basic version of the program, in which program parameters with provisional numerical values are stored.

7. The method according to Claim 6, **characterised in that** the provisionally stored numerical values of the program parameters are selected such that they make possible a monitoring of the tire pressure for at least one vehicle type.

8. The method according to Claim 6 or 7, **characterised in that** the provisional program parameters stored in the basic version of the program are overwritten in the memory (5, 6) with the subsequently transmitted program parameters intended for the selected vehicle type.

9. The method according to any one of the preceding claims, **characterised in that** one or more program parameters from the following group of program parameters are stored in the memory (5, 6) of the tire pressure monitoring device (1):
warning thresholds for insufficient power supply,
program parameters determining the structure of a data telegram to be transmitted by the tire pressure monitoring device (1),
program parameters which determine the transmission speed of the first transmitter (8),
program parameters which determine the type of modulation of the first transmitter (8),
program parameters which determine time intervals between measurement operations and time intervals between transmitting operations pressure-dependently and/or speed-dependently,
program parameters which determine the type of the encoding of a data telegram to be transmitted by the tire pressure monitoring device (1);
program parameters which determine the states which the tire pressure monitoring device (1) can assume and which transitions between these states are allowed and under which conditions such transitions take place; and
a program parameter which determines the frequency at which the first transmitter (8) transmits,
program parameters which determine the time intervals between the measurement operations and/or between the transmitting operations dependent on the tire pressure and/or dependent on the rate of the tire pressure drop and/or dependent on the vehicle speed.

10. The method according to any one of the preceding claims, **characterised in that** an identifier is stored as a program parameter in the memory (5, 6) of a first tire pressure monitoring device (1) already in the basic version of the program and individualises the first tire pressure monitoring device (1), and **in that** this identifier is subsequently overwritten by the identifier of a second tire pressure monitoring device, which in an unchanged wheel position of the vehicle is replaced with the first tire pressure monitoring device (1).

11. A system
including one or more tire pressure monitoring devices (1) which are configured for mounting on a wheel of a vehicle provided with pneumatic tires and which have
a device (3) for measuring the air pressure (tire pressure) present in the pneumatic tire or for measuring a change of the tire pressure, optionally also one or more devices for measuring variables other than the tire pressure,
an electrical or electronic circuit (4), of which at least a part operates digitally, for controlling the tire pressure monitoring device (1) and optionally for processing the measured values delivered by the measuring devices (3),
an electrical power source (11) for the power supply of the tire pressure monitoring device (1),
and a first transmitter (8) operating in a first frequency range configured to transmit data from the tire pressure monitoring device (1) to a first receiver (9) located outside the tire pressure monitoring device (1), **characterised in that**
this system further includes a memory (5, 6) in which there is stored merely a basic version of a program for the circuit (4), from which basic version can be generated can be generated a full version of the program by transmitting program parameters, which are intended for a selectable vehicle type, into the memory (5, 6) and by storing them therein,
and
includes a digitally operating transmission device (12), in which a plurality of sets of the program parameters are stored, each set being stored under one of a plurality of addresses corresponding to selectable vehicle types, each set of program parameters being intended, following selection of such a set specific for a selected vehicle type, to be transmitted into the memory (5, 6) of the tire pressure monitoring device (1) in order to, by insertion of the selected program parameters into the basic version of the program, said basic version being already stored in the tire pressure monitoring device (1), convert said basic version into a full version of the program suitable for the selected vehicle type, with which the tire pressure monitoring device (1) can monitor the tire pressure of a wheel belonging to precisely this selected vehicle type.

12. The system according to Claim 11, in which the sets of program parameters are present in the transmission device (12) in the form of a pull down menu.

13. The system according to Claim 11 or 12, **characterised in that** a second receiver (10), which is configured to receive data from a second transmitter (15) located outside the tire pressure monitoring device (1) and operating in a second frequency range, is provided in the tire pressure monitoring device (1), and **in that** the transmission device (12) comprises the second transmitter (15) transmitting in the second frequency range.

14. The system according to Claim 13, **characterised in that** the transmission device (12) is or contains a mobile telephone, in particular a Smartphone, that the mobile telephone (12) has an interface (13) for outputting data, which include the program parameters to be transmitted, and **in that** a module (14) can be connected to this interface (13), which module is part of the system and contains the transmitter (15) operating in the second frequency range and also a control circuit (16), which receives program parameters output via the interface (13) and controls the transmitter (15) such that said transmitter transmits the program parameters to the second receiver (10).

15. The system according to any one of Claims 11 to 14, **characterised in that** a first memory (5) of the tire pressure monitoring device (1) is integrated, together with the device (3) for measuring tire pressure, in an integrated circuit (2),
**in that** a separate additional memory (6) is additionally provided in the tire pressure monitoring device (1), wherein the first memory (5) and the additional memory (6) together form the memory (5, 6) of the tire pressure monitoring device (1),
**in that** a cable connection (7) exists between the first memory (5) in the integrated circuit (2) and the additional memory (6), via which cable connection a communication is possible between the first memory (5) and the additional memory (6),
and **in that** the basic version of the program is stored partly in the first memory (5) of the integrated circuit (2) and partly in the additional memory (6).

16. The method according to any one of Claims 1 to 10, which is carried out in a system according to Claim 15, **characterised in that** the communication between the first memory (5) in the integrated circuit (2) and the additional memory (6) is encrypted.

17. A tire pressure monitoring device which is configured for mounting on a wheel of a vehicle provided with pneumatic tires and has
a device (3) for measuring the air pressure (tire pressure) present in the pneumatic tire or for measuring a change of the tire pressure,
an electrical or electronic circuit (4), of which at least a part operates digitally, for controlling the tire pressure monitoring device (1),
a memory (5, 6), in which a program for the circuit (4) is stored,
an electrical power source (11) for the power supply of the tire pressure monitoring device (1),
and a first transmitter (8) operating in a first frequency range for transmitting data from the tire pressure monitoring device (1) to a first receiver (9) located outside the tire pressure monitoring device (1),
**characterised in that**
the tire pressure monitoring device further includes a memory (5, 6) in which there is stored merely a basic version of a program for the circuit (4), from which basic version can be generated can be generated a full version of the program by transmitting program parameters, which are intended for a selectable vehicle type, into the memory (5, 6) and by storing them therein, and that a first memory (5) of the tire pressure monitoring device (1), together with the device (3) for measuring the tire pressure, is integrated in an integrated circuit (2),
**in that** a separate additional memory (6) is additionally provided in the tire pressure monitoring device (1), wherein the first memory (5) and the additional memory (6) together form the memory (5, 6) of the tire pressure monitoring device (1),
and **in that** an electric wire connection (7) exists between the first memory (5) in the integrated circuit (2) and the additional memory (6), via which electric wire connection a communication is possible between the first memory (5) and the additional memory (6).

18. The use of a tire pressure monitoring device according to Claim 17 in a method according to any one of the Claims 1 to 10 and 16.

19. The use of a tire pressure monitoring device according to Claim 17 in a system according to any one of the Claims 11 to 15.

## Revendications

1. Procédé d'adaptation d'un dispositif de contrôle de pression de pneus (1) à un type de véhicule, où le dispositif de contrôle de pression de pneus (1) est conçu pour le montage sur une roue d'un véhicule muni de pneus,
et a
un dispositif (3) destiné à la mesure de la pression de l'air (pression du pneu) régnant dans le pneu ou d'une variation de la pression du pneu, éventuellement, encore un ou plusieurs dispositifs destiné à la mesure d'autres grandeurs de mesure que la pression du pneu,
un circuit électrique (4), dont au moins une partie fonctionne de manière numérique, pour la commande du dispositif de contrôle de pression de pneus (1) et éventuellement pour le traitement des valeurs de mesures délivrées par les dispositifs de mesure (3),
une mémoire (5, 6) dans laquelle est stocké un programme destiné au circuit (4),
une source de courant électrique (11) pour l'alimentation en courant du dispositif de contrôle de pression de pneus (1), et
un premier émetteur (8) travaillant dans un premier domaine de fréquences pour la transmission de données à partir du dispositif de contrôle de pression de pneu (1) vers un premier récepteur (9) situé à l'extérieur du dispositif de contrôle de pression de pneu (1),
**caractérisé en ce**
**que** dans la mémoire (5, 6), tout d'abord, seule une version de base du programme est stockée, à partir de laquelle plusieurs versions différentes du programme peuvent être développées pour plusieurs types de véhicules, et que, pour un type de véhicule choisi, une version complète adaptée est ainsi générée, de sorte que des paramètres de programme définis destinés au type de véhicule choisi peuvent être stockés à postériori dans la mémoire (5, 6) du dispositif de contrôle de pression de pneus (1).

2. Procédé selon la revendication 1, **caractérisé en ce que** le dispositif de contrôle de pression de pneus (1) a une entrée, par laquelle les paramètres de programme sont transmis par voie filaire dans la mémoire (5, 6).

3. Procédé selon la revendication 1 ou 2, **caractérisé en ce qu'**un deuxième récepteur (10) est prévu dans le dispositif de contrôle de pression de pneus (1), lequel est conçu pour recevoir des données à partir d'un deuxième émetteur (15) travaillant dans un deuxième domaine de fréquences, situé à l'extérieur du dispositif de contrôle de pression de pneus (1), et que les paramètres de programmes sont transmis au moyen de signaux radio dans le deuxième domaine de fréquences vers le deuxième récepteur (10).

4. Procédé selon la revendication 3, **caractérisé par** l'emploi d'un deuxième émetteur (15) qui travaille à une fréquence inférieure à celle du premier émetteur (8).

5. Procédé selon la revendication 3 ou 4, **caractérisé en ce que** les paramètres de programme sont transmis avec un téléphone mobile (12) ou avec un Smartphone dans la mémoire (5, 6) du dispositif de contrôle de pression de pneus (1), lequel est équipé avec une interface (13) par l'intermédiaire de laquelle des signaux radio peuvent être envoyés dans le deuxième domaine de fréquences.

6. Procédé selon l'une des revendications 3 à 5, **caractérisé par** l'emploi d'une version de base du programme, dans laquelle des paramètres de programme sont stockés avec des valeurs provisoires.

7. Procédé selon la revendication 6, **caractérisé en ce que** les valeurs stockées provisoirement des paramètres de programme sont choisis de telle manière qu'elles permettent une surveillance de la pression des pneus pour au moins un type de véhicule.

8. Procédé selon la revendication 6 ou 7, **caractérisé en ce que** les paramètres de programme enregistrés provisoires dans la version de base du programme sont corrigés avec les paramètres de programme définis destinés au type de véhicule choisi reportés ultérieurement.

9. Procédé selon l'une des revendications précédentes, **caractérisé en ce qu'**un ou plusieurs paramètres de programme du groupe suivant des paramètres de programme sont enregistrés dans la mémoire (5, 6) du dispositif de contrôle de pression de pneus (1) :
des seuils d'avertissements pour une alimentation en courant insuffisante ;
des paramètres de programme qui fixent la réalisation d'un télégramme de données à envoyer par le dispositif de contrôle de pression de pneus (1), des paramètres de programme lesquels fixent la vitesse de transmission du premier émetteur (8) ;
des paramètres de programme, lesquels fixent le mode de modulation du premier émetteur (8) ;
des paramètres de programme, lesquels fixent des intervalles de temps entres des processus de mesure et des intervalles de temps entre des processus d'émission en fonction de la pression et/ou en fonction de la vitesse,
des paramètres de programme, lesquels fixent le type de codage d'un télégramme de données à envoyer par le dispositif de contrôle de pression de pneus (1) ;
des paramètres de programme, lesquels fixent quels états peuvent être pris en compte par le dispositif de contrôle de pression de pneus (1), quelles transitions sont permises entre ces états et dans quelles circonstances ils se produisent ;
un paramètre de programme, lequel fixe la fréquence sur laquelle le premier émetteur (8) émet ;
des paramètres de programme, lesquels fixent les intervalles de temps entre les processus de mesure et/ou entre les processus d'émission en fonction de la pression de pneu et/ou en fonction de la vitesse de décroissance de la pression de pneu et/ou en fonction de la vitesse du véhicule.

10. Procédé selon l'une des revendications précédentes, **caractérisé en ce qu'**en tant que paramètre de programme déjà dans la version de base du programme, un identifiant est enregistré dans la mémoire (5, 6) d'un premier dispositif de contrôle de pression de pneus (1), lequel rend le premier dispositif de contrôle de pression de pneus (1) individuel, et que cet identifiant est ultérieurement corrigé avec l'identifiant d'un deuxième dispositif de contrôle de pression de pneus, lequel est remplacé au niveau d'une position de roue constante du véhicule pour le premier dispositif de contrôle de pression de pneus (1).

11. Système
à base d'un ou de plusieurs dispositifs de contrôle de pression de pneus (1), lesquels sont conçus pour le montage sur une roue d'un véhicule muni de pneus, et a
un dispositif (3) pour la mesure de la pression d'air (pression du pneu) régnant dans le pneu ou d'une variation de la pression de pneu, éventuellement, un ou plusieurs dispositifs pour la mesure d'autres grandeurs de mesure que la pression du pneu,
un circuit (4) électrique ou électronique, dont une partie au moins travaille de manière numérique, pour la commande du dispositif de contrôle de pression de pneus (1) et éventuellement pour le traitement de valeurs de mesure délivrées par les dispositifs de mesure (3),
une source de courant (11) électrique pour l'alimentation électrique du dispositif de contrôle de pression de pneus (1),
ainsi qu'un premier émetteur (8) travaillant dans un premier domaine de fréquences pour la transmission de données à partir du dispositif de contrôle de pression de pneus (1) vers un premier récepteur (9) situé en dehors du dispositif de contrôle de pression de pneus (1), **caractérisé en ce que** ce système a en outre une mémoire (5, 6), où seule une version de base d'un programme pour le circuit (4) est stockée dans la mémoire (5, 6), à partir de laquelle une version complète du programme peut être générée, **en ce que** des paramètres de programme définis destinés à un type de véhicule choisi sont transmis dans la mémoire (5, 6) et y sont stockés,
et
à base d'un appareil de transmission (12) travaillant de manière numérique, dans lequel, une suite des paramètres de programme est déposée pour des types de véhicules choisis sous plusieurs adresses, qui est prévu pour être transmis après le choix d'une telle suite, qui est spécifique pour le type de véhicule choisi dans la mémoire (5, 6) du dispositif de contrôle de pression de pneus (1) afin, par l'incorporation des paramètres de programme choisis dans la version de base du programme déjà enregistrée dans le dispositif de contrôle de pression de pneus (1), transformer celle-ci en une version complète du programme adaptée au type de véhicule choisi, avec lequel le dispositif de contrôle de pression de pneus (1) peut contrôler la pression de pneu d'une roue sur justement ce type de véhicule choisi.

12. Système selon la revendication 11, dans lequel les suites de paramètres de programme se présentent sous la forme d'un menu déroulant dans l'appareil de transmission (12).

13. Système selon la revendication 11 ou 12, **caractérisé en ce qu'**un deuxième récepteur (10), lequel est conçu pour recevoir des données à partir d'un deuxième émetteur (15) situé à l'extérieur du dispositif de contrôle de pression de pneus (1), travaillant dans un deuxième domaine de fréquences, est prévu dans le dispositif de contrôle de pression de pneu (1) et que l'appareil de transmission (12) présente le deuxième émetteur (15) émettant sur le deuxième domaine de fréquences.

14. Système selon la revendication 13, **caractérisé en ce que** l'appareil de transmission (12) est ou contient un téléphone mobile, notamment un Smartphone,
que le téléphone mobile (12) a une interface (13) pour la sortie de données, dont font partie les paramètres de programme à transmettre,
et qu'un module (14) peut être adjoint à cette interface (13), lequel est un constituant du système et contient l'émetteur (15) travaillant dans le deuxième domaine de fréquences ainsi qu'un circuit de commande (16), qui reçoit des paramètres de programme émis par le biais de l'interface (13) et commande l'émetteur (15) de telle manière qu'il transmet les paramètres de programme au deuxième récepteur (10).

15. Système selon l'une des revendications 11 à 14, **caractérisé en ce qu'**une première mémoire (5) du dispositif de contrôle de pression de pneus (1) est intégrée ensemble avec le dispositif (3) destiné à la mesure de la pression de pneu dans le circuit (2) intégré,
qu'en outre, une mémoire auxiliaire (6) séparée est prévue dans le dispositif de contrôle de pression de pneus (1), où la première mémoire (5) et la mémoire auxiliaire (6) forment, assemblées, la mémoire (5, 6) du dispositif de contrôle de pression de pneus (1),
qu'il y a une liaison filaire (7) entre la première mémoire (5) dans le circuit (2) intégré par laquelle une communication entre la première mémoire (5) et la mémoire auxiliaire (6) est possible,
et que la version de base du programme est stockée partiellement dans la première mémoire (5) du circuit intégré (2) et partiellement dans la mémoire auxiliaire (6).

16. Procédé selon l'une des revendications 1 à 10, lequel est exécuté dans un système selon la revendication 15, **caractérisé en ce que** la communication entre la première mémoire (5) dans le circuit intégré (2) et dans la mémoire auxiliaire (6) a lieu de manière chiffrée.

17. Dispositif de contrôle de pression de pneu, lequel est conçu pour l'application sur une roue d'un véhicule muni de pneus, et a un dispositif (3) destiné à la mesure de la pression d'air régnant dans le pneu (pression de pneu) ou à la variation de la pression du pneu,
un circuit (4) électrique ou électronique, dont au moins une partie fonctionne de manière numérique, pour la commande du dispositif de contrôle de pression de pneus (1),
une mémoire (5, 6) dans laquelle est stocké un programme pour le circuit (4),
une source de courant (11) électrique pour l'alimentation en courant du dispositif de contrôle de pression de pneus (1),
et un premier émetteur (8) travaillant dans un premier domaine de fréquences pour la transmission de données à partir du dispositif de contrôle de pression de pneus (1) vers un premier récepteur (9) situé à l'extérieur du dispositif de contrôle de pression de pneus (1),
**caractérisé en ce que** ce dispositif de contrôle de pression de pneus a en outre une mémoire (5, 6), où, seulement une version de base d'un programme destinée au circuit (4) est stockée dans la mémoire (5, 6), à partir de laquelle une version complète du programme peut être générée, **en ce que** des paramètres de programme destinés pour le type de véhicule pouvant être choisi sont transmis dans la mémoire (5, 6) et y sont stockés, et qu'une première mémoire (5) du dispositif de contrôle de pression de pneus (1) est intégrée avec le dispositif (3) destiné à la mesure de la pression de pneu dans un circuit (2) intégré,
qu'en outre une mémoire auxiliaire (6) séparée est prévue dans le dispositif de contrôle de pression de pneus (1), où la première mémoire (5) et la mémoire auxiliaire (6) assemblées forment la mémoire (5, 6) du dispositif de contrôle de pression de pneus (1),
et qu'une liaison filaire (7) existe entre la première mémoire (5) dans le circuit (2) intégré et la mémoire auxiliaire (6), par laquelle une communication est possible entre la première mémoire (5) et la mémoire auxiliaire (6).

18. Utilisation du dispositif de contrôle de pression de pneus selon la revendication 17 dans un procédé selon l'une des revendications 1 à 10 et 16.

19. Utilisation d'un dispositif de contrôle de pression de pneus selon la revendication 17 dans un système selon l'une des revendications 11 à 15.
